# EUROPÄISCHE PATENTANMELDUNG

(11) **EP 1 114 750 A2**
(43) Veröffentlichungstag der Anmeldung: **11.07.2001**
(21) Anmeldenummer: 00125067.9
(22) Anmeldetag: 17.11.2000
(51) Int. Cl.: B60R 1/02

(54) **Vorrichtung zur Verstellung eines Rückspiegels für ein Kraftfahrzeug**

(30) Priorität: 05.01.2000 DE 10000215
(71) Anmelder: ROBERT BOSCH GMBH, 70442 Stuttgart (DE)
(72) Erfinder: Zimmermann, Uwe, Dr., 71636 Ludwigsburg (DE); Pruksch, Achim, 74861 Neudenau (DE); Uhler, Werner, Dr., 76646 Bruchsal (DE)

(57) **Zusammenfassung**

Erfindungsgemäß wird eine Vorrichtung zum Verstellen eines Rückspiegels an einem Kraftfahrzeug vorgeschlagen, bei dem insbesondere für eine Zugmaschine mit einem Anhänger der Knickwinkel (a) des Fahrzeuggespanns für die Verstellung des Rückspiegels berücksichtigt wird. Eine Betätigung durch den Fahrer ist nicht erforderlich, da die Verstellung automatisch erfolgt. Mit Hilfe eines Sensors für den Lenkwinkel, einem Geschwindigkeitssignal und/oder einem Signal für die Vorwärts- oder Rückwärtsfahrt läßt sich eine optimale Anpassung des Überwachungsraumes (6) seitlich und hinter dem Fahrzeug erreichen. Ein Hilfsrückspiegel (30) kann alternativ zusätzlich vom Steuergerät (22) für einen zweiten Überwachungsraum (7) eingestellt werden. Der Hilfsrückspiegel (30) wird im Bereich des Rückspiegels (4) entweder mit dem Gehäuse des Rückspiegels 4 oder dem Fahrzeug direkt verbunden.

## Beschreibung

### Stand der Technik

Die Erfindung geht aus von einer Vorrichtung zur Verstellung eines Rückspiegels, insbesondere für eine Zugmaschine mit einem Anhänger nach der Gattung des Hauptanspruchs. Aus der DE 38 27 879 C1 ist schon ein Fahrzeug-Außenrückspiegel bekannt, dessen Spiegelglas mittels eines willkürlich aktivierbaren Stellgliedes um eine Hochachse schwenkbar ist. Das Stellglied verstellt das Spiegelglas dann automatisch, wenn ein Schalter des dem Außenspiegel zugeordneten Fahrtrichtungsanzeigers betätigt wird und eine den toten Sichtbereich erfassende Sender/Empfänger-Einrichtung ein Objekt-Erkennungs-Signal geliefert hat. Bei diesem bekannten Außenrückspiegel tritt also das Problem auf, daß das Stellglied erst dann aktiviert wird, wenn zumindest der Fahrtrichtungsanzeiger durch den Fahrer betätigt wird. Das bedeutet, daß lediglich dann, wenn der Fahrer des Fahrzeugs beispielsweise einen Spurwechsel beabsichtigt und dann den Fahrtrichtungsanzeiger betätigt, eine Verstellung erst erfolgt, wenn gleichzeitig noch das Objekt-Erkennungs-Signal generiert wurde.

### Vorteile der Erfindung

Die erfindungsgemäße Vorrichtung mit den kennzeichnenden Merkmalen des Hauptanspruchs hat demgegenüber den Vorteil, daß die Spiegelverstellung auch dann funktioniert, wenn die Fahrtrichtungsanzeige nicht betätigt wird. Dadurch ist gewährleistet, daß jeder Fahrer, unabhängig von der Sitzposition oder seiner Größe, einen optimalen Rückblick in den Rückspiegel hat. Als besonders vorteilhaft wird angesehen, daß insbesondere im Rangierbetrieb, d. h. beim langsamen Rückwärtsfahren beispielsweise in einer Einfahrt durch Erfassung des Knickwinkels der Rückspiegel automatisch nachgestellt wird, sodaß der Fahrer sich voll auf den Rangierbetrieb konzentrieren kann.

Durch die in den abhängigen Ansprüchen aufgeführten Maßnahmen sind vorteilhafte Weiterbildungen und Verbesserungen der im Hauptanspruch angegebenen Vorrichtung möglich. Insbesondere wird als Vorteil angesehen, daß die Spiegelverstellung auch in Abhängigkeit von einem Lenkwinkelsensor erfolgen kann. Der Lenkwinkelsensor reagiert insbesondere dann, wenn das Fahrzeug mit minimalster Geschwindigkeit fährt, früher als der Knickwinkelsensor, sodaß dadurch praktisch eine vorausschauende Spiegelverstellung ermöglicht wird.

Durch Erfassung weiterer Parameter wie der Fahrgeschwindigkeit oder der Fahrtrichtung ist eine differenzierte Anpassung der Spiegelverstellung an die Sichtverhältnisse des Fahrers und an den zu überwachenden Raum möglich.

Günstig ist weiterhin die Anordnung eines zusätzlichen Hilfsrückspiegels, der einen weiteren Überwachungsraum kontrolliert und somit dem Fahrer eine noch größere Sicherheit insbesondere bei der gefährlichen Rückwärtsfahrt liefert.

Da ein Fahrzeuggespann, bestehend aus einer Zugmaschine und einem Anhänger, nicht beliebig enge Kurven in Vorwärts- oder Rückwärtsrichtung fahren kann, genügt es, den Verstellwinkel für den Rückspiegel so auszulegen, daß er durch den maximalen Knickwinkel begrenzt wird. Der Spiegelsteller kann entsprechend günstig konstruiert werden.

Wird die Fahrgeschwindigkeit größer, dann beschränkt sich die Überwachung des Seiten- und Rückraumes des Fahrzeuges auf einen engeren Bereich. In diesem Fall kann der Rückspiegel auf eine Grundstellung gestellt werden und der Spiegelsteller deaktiviert werden. Dieses ist insbesondere auch für ein Kamerasystem günstig, das beispielsweise als Außenspiegel verwendbar ist.

### Zeichnung

Ein Ausführungsbeispiel der Erfindung ist in der Zeichnung dargestellt und in der nachfolgenden Beschreibung näher erläutert. Es zeigen Figur la in schematischer Darstellung ein Fahrzeuggespann in Seitenansicht, Figur 1b zeigt das Fahrzeuggespann in Draufsicht, Figur 2 zeigt ein Blockschaltbild, Figur 3 zeigt eine Spiegelanordnung, und Figur 4 zeigt ein Flußdiagramm.

### Beschreibung des Ausführungsbeispiels

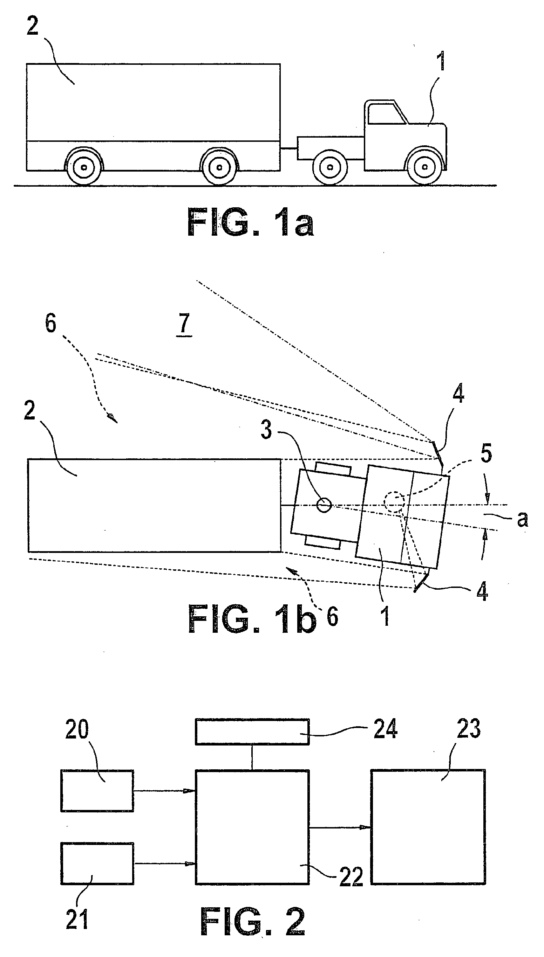

Figur 1a zeigt in schematischer Darstellung ein Fahrzeuggespann mit einer Zugmaschine 1 und einem Anhänger 2. Das Fahrzeuggespann kann beispielsweise ein LKW mit einem Anhänger, ein Sattelschlepper mit einem Aufleger oder ein PKW mit einem Anhänger oder Wohnanhänger sein. In der Draufsicht der Figur 1b ist eine Kurvenfahrt oder Rangierfahrt des Fahrzeuggespanns erkennbar. Im Bereich der Anhängevorrichtung ist ein Knickwinkelsensor 3 angeordnet, der einen Knickwinkel a zwischen der Fahrzeuglängsachse der Zugmaschine 1 und der Längsachse des Anhängers 2 erfaßt. Winkelsensoren sind per se bekannt und müssen nicht näher erläutert werden. An die Zugmaschine sind vorzugsweise rechts und links Spiegel 4 angeordnet, die beispielsweise als Außenspiegel ausgebildet sind. Im allgemeinen genügt es, nicht den gesamten Spiegel zu verstellen, sondern lediglich das Spiegelglas. Der Rückspiegel 4 wird bei Fahrtbeginn in einer Grundstellung so eingestellt, daß der Fahrer bei Geradeausfahrt eine optimale Übersicht über den Seiten-und/oder rückwärtigen Raum seines Fahrzeuggespanns hat. Natürlich kann anstelle des Außenspiegels 4 auch ein Kamerasystem mit einer Kamera und einem Bildschirm installiert sein, wobei beispielsweise die Kamera selbst an geeigneter Stelle des Fahrzeugs montiert ist und nach hinten blickt, während der Fahrer auf einem Bildschirm innerhalb seines Fahrzeugs das Kamerabild mit dem Überwachungsraum 6 oder einem zweiten Überwachungsraum 7 erfaßt. In alternativer Ausgestaltung der Erfindung ist vorgesehen, beispielsweise bei kleineren Fahrzeugen den Innenspiegel entsprechend zu verstellen.

Figur 2 zeigt ein Blockschaltbild, nach dem die Spiegelverstellung durchgeführt wird. Ein Steuergerät 22 ist mit einem Sensor 20 zur Erfassung des Knickwinkels a und alternativ mit einem Lenkwinkelsensor 21 verbunden. Des weiteren ist vorgesehen, daß das Steuergerät 22 über geeignete Geber die Fahrgeschwindigkeit und die Fahrtrichtung, d. h. Vorwärts- oder Rückwärtsfahrt erfaßt. Beispielsweise kann die Vorwärts- oder Rückwärtsfahrt durch einen Kontakt des Schalthebels erfolgen, der auch den Rückfahrscheinwerfer schaltet und bereits am Fahrzeug vorhanden ist. Aus den empfangenen Signalen bildet das Steuergerät 22 vorzugsweise mit Hilfe eines Steuerprogramm ein Signal für einen Spiegelsteller 23, an den das Steuergerät angeschlossen ist. Der Spielsteller 23 bewirkt über eine mechanisches Koppelgetriebe eine Verstellung des Spiegels 4. Für den Störungsfall ist eine Anzeige 24 vorgesehen, über die der Fahrer informiert werden kann, daß die Spiegelverstellung funktionsunfähig ist.

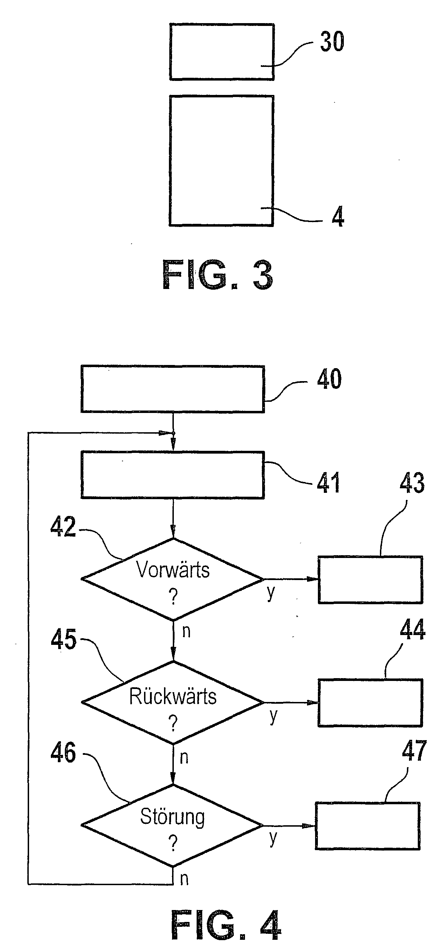

Figur 3 zeigt eine Spiegelanordnung mit dem Rückspiegel 4 und einem Hilfsrückspiegel 30. Der Hilfsrückspiegel 30 kann dabei über dem Rückspiegel 4 angeordnet sein und mit einer nicht dargestellten Verbindung entweder mit dem Gehäuse des Rückspiegels 4 oder dem Fahrzeug selbst verbunden sein. Auch der Hilsrückspiegel 30 kann von dem Steuergerät 22 betätigt werden und einen zweiten Überwachungsbereich 7 für den Fahrer erfassen.

Die Funktionsweise der erfindungsgemäßen Vorrichtung wird anhand des Flußdiagramms der Figur 4 näher erläutert. Zunächst wird vor Beginn einer Fahrt, nach einem Fahrerwechsel oder nach einem Fahrzeugstop eine Grundeinstellung des oder der Rückspiegel 4, 30 durchgeführt. Die Grundeinstellung wurde beispielsweise empirisch ermittelt und ist im Steuergerät 22 gespeichert. Sie gilt für eine optimale Sicht nach hinten für den Überwachungsraum 6 (Position 40) und kann vorzugsweise per Knopfdruck erreicht werden. Befindet sich das Fahrzeug nun im Fahr- bzw. Rangierbetrieb bei niedriger Geschwindigkeit, dann wird zunächst der Knickwinkel a des Sensors 3 vom Steuergerät 22 eingelesen. Sind weitere Sensoren, wie der Lenkwinkelsensor 21 oder dergleichen angeschlossen, dann werden auch deren Daten vom Steuergerät 22 erfaßt und vorzugsweise mit gespeicherten Werten einer Tabelle verglichen. Dieses erfolgt in Position 41. In Position 42 prüft das Steuergerät 22 nun, ob das Fahrzeug sich in Vorwärtsrichtung bewegt. Ist dies der Fall, dann wird in Position 43 die Spiegelverstellung für den Sichtbereich 6 so gewählt, daß der Fahrer wieder eine optimale Sicht hat. Befindet sich dagegen das Fahrzeug in Rückwärtsfahrt (Position 45), dann wird in Position 44 der Rückspiegel 4 für die linke und rechte Fahrzeugseite nach links (entgegen dem Uhrzeigersinn) geschwenkt. Mit den zusätzlichen Informationen, beispielsweise des Lenkwinkelsensors 21 kann nun der Hilfsrückspiegel 30 für den zweiten Sichtbereich 7 entsprechend eingestellt werden. Dieser Hilfsrückspiegel 30 erfaßt vorausschauend einen Bereich, der in nächster Zeit in Abhängigkeit vom Lenkwinkel gesteuert wird. In Position 46 wird geprüft, ob eine Störung vorliegt. Ist dies der Fall, dann wird in Position 47 eine entsprechende Fehlermeldung ausgegeben. Liegt keine Störung vor, dann springt das Programm auf Position 41 zurück, und der Zyklus beginnt aufs Neue.

Fährt das Fahrzeug nun gemäß der Figur 1b sehr langsam vorwärts und schlägt der Fahrer die Lenkung weiter nach rechts ein, so wird der Hilfsrückspiegel 30 im Vergleich zum Rückspiegel 4 etwas nach rechts (im Uhrzeigersinn) verstellt. Die Verstellmöglichkeit selbst wird in Abhängigkeit von den Fahrzeugverhältnissen begrenzt. Das System wird deaktiviert, wenn eine Grenzgeschwindigkeit überschritten wurde.

## Patentansprüche

1. Verfahren zur Verstellung eines Rückspiegels, insbesondere für eine Zugmaschine mit einem Anhänger, mit einem Spiegel (4) zur Erfassung des Fahrzeugseiten-und/oder -rückraumes (6) durch den Fahrer (5), mit einem Steuergerät (22) und mit einem Sensor (3), dadurch gekennzeichnet, daß der Sensor (3) den Knickwinkel (a) zwischen der Zugmaschine (1) und dem Anhänger (2) erfaßt, und daß das Steuergerät (22) den Spiegel (4) zur Erfassung des Überwachungsraumes (6) durch den Fahrer (5) in Abhängigkeit von wenigstens dem Knickwinkel (a) verstellt.

2. Verfahren nach Anspruch 1, dadurch gekennzeichnet, daß das Steuergerät (22) die Spiegelverstellung in Abhängigkeit von einem Winkelsignal verstellt, das ein Lenkwinkelsensor (21) liefert.

3. Verfahren nach Anspruch 1 oder 2, dadurch gekennzeichnet, daß das Steuergerät (22) die Spiegelverstellung in Abhängigkeit von der Fahrgeschwindigkeit durchführt.

4. Verfahren nach einem der vorhergehenden Ansprüche, dadurch gekennzeichnet, daß das Steuergerät (22) die Spiegelverstellung in Abhängigkeit von der Vorwärts-oder Rückwärtsfahrt durchführt.

5. Verfahren nach einem der vorhergehenden Ansprüche, dadurch gekennzeichnet, daß zusätzlich ein Hilfsrückspiegel (30) vorgesehen ist, und daß das Steuergerät (22) den Hilfsrückspiegel (30) in Abhängigkeit von wenigstens einem der beanspruchten Parameter vorausschauend für einen zweiten Überwachungsraum (7) einstellt.

6. Verfahren nach einem der vorhergehenden Ansprüche, dadurch gekennzeichnet, daß das Steuergerät (22) den Verstellwinkel für die Rückspiegel (4, 30) in Abhängigkeit von dem maximal zulässigen Knickwinkel (a) begrenzt.

7. Verfahren nach einem der vorhergehenden Ansprüche, dadurch gekennzeichnet, daß die Steuerung (22) den Spiegelsteller (23) bei Überschreiten einer vorgegebenen Grenzgeschwindigkeit deaktiviert.

8. Verfahren nach einem der vorhergehenden Ansprüche, dadurch gekennzeichnet, daß der Rückspiegel (4, 30) ein Außenspiegel ist.

9. Verfahren nach einem der vorhergehenden Ansprüche, dadurch gekennzeichnet, daß der Rückspiegel (4) und/oder der Außenspiegel (30) ein Kamerasystem ist.
